# EUROPÄISCHE PATENTANMELDUNG

(11) **EP 2 112 090 A1**
(43) Veröffentlichungstag der Anmeldung: **28.10.2009**
(21) Anmeldenummer: 08405114.3
(22) Anmeldetag: 22.04.2008
(51) Int. Cl.: B65D 75/34, B32B 3/28, B32B 7/02, B32B 7/06, B32B 15/08, B32B 15/20, B32B 27/08, B32B 27/10, B32B 29/00

(54) **Deckfolie für Blisterverpackungen**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Eine Deckfolie (10) für thermo- und kaltgeformte Blisterbodenteile von kindergesicherten Blisterverpackungen besteht aus einem Mehrschichtlaminat mit einer zur Siegelung gegen ein Blisterbodenteil vorgesehenen Heisssiegelschicht (12), einer an die Heisssiegelschicht (12) angrenzenden Trägerschicht (14) und einer an die Trägerschicht angrenzenden Deckschicht (16). Die Trägerschicht (14) umfasst eine Aluminiumfolie oder einen durchdrückbaren Kunststofffilm und die Deckschicht (16) ist mittels eines Kaschierklebers (15) gegen die Trägerschicht (14) kaschiert, wobei die Haftung des Kaschierklebers (15) zur Trägerschicht (14) und/oder zur Deckschicht (16) geringer ist als die Haftung zwischen der Heisssiegelschicht (12) und der Trägerschicht (14), und wobei die Deckschicht (16) von der Trägerschicht (14) peelbar ist.

## Beschreibung

Die Erfindung betrifft eine Deckfolie für thermo- und kaltgeformte Blisterbodenteile von kindergesicherten Blisterverpackungen, bestehend aus einem Mehrschichtlaminat mit einer zur Siegelung gegen ein Blisterbodenteil vorgesehenen Heisssiegelschicht, einer an die Heisssiegelschicht angrenzenden Trägerschicht und einer an die Trägerschicht angrenzenden Deckschicht.

Üblicherweise werden Blister zur Verpackung von festen Produkten, wie kosmetische, pharmazeutische und medizinaltechnische Produkte, Diagnostika, Nahrungsergänzungsmittel, Lebensmittel und Süsswaren, aber auch andere, in einem Blister mit mindestens einer Kavität verpackte Produkte, mit einer durchdrückbaren Deckfolie versehen.

Die Behälter werden durch Thermoformung oder Kaliverformung, z.B. durch Streckziehen, Tiefziehen oder Coining, hergestellt. Die Deckfolien weisen im Aufbau meistens eine Aluminiumfolie auf, welche auf der zum Produkt liegenden Seite eine Heisssiegelschicht, vorzugsweise ein Heisssiegellack, und auf der Aussenseite einen Druckvorlack hat.

Es gibt auch Laminate mit Papier oder mit einem Kunststofffilm oder mit Papier und einem Kunststofffilm. Derartige Laminate werden z.B. für peelbare Öffnungen oder zum Beschriften von Einzeldosen im Krankenhaus engesetzt. Auch ist der Kontrast von Papier beim Bedrucken höher, was speziell für die sehr gute Lesbarkeit aller Arten von Barcodes genutzt wird.

Die peelbare Öffnung wird zur Entnahme von Produkten eingesetzt, die durch die mechanische Beanspruchung beim Herausdrücken zerbrechen können oder deformiert werden, oder für pulvrige Produkte.

In vielen Fällen ist es nicht erwünscht, dass Kleinkinder Blisterverpackungen öffnen und somit für dieses Alter gefährliche Produkte entnehmen können. Dies kann weitestgehend verhindert werden, indem die Öffnung in mehreren Schritten erfolgen muss und die Deckfolie auch durch Beissen nicht zerstört werden kann.

Der Erfindung liegt die Aufgabe zugrunde, eine zur Siegelung gegen alle gängigen Bodenmaterialien geeignete Deckfolie zu schaffen, die ein verbessertes kindergesichertes Öffnen von Blisterverpackungen ermöglicht und auf bestehenden Abpackanlagen ohne Umrüsten eingesetzt werden kann.

Zur erfindungsgemässen Lösung der Aufgabe führt, dass die Trägerschicht eine Aluminiumfolie oder einen durchdrückbaren Kunststofffilm umfasst und die Deckschicht mittels eines Kaschierklebers gegen die Trägerschicht kaschiert ist, wobei die Haftung des Kaschierklebers zur Trägerschicht und/oder zur Deckschicht geringer ist als die Haftung zwischen der Heisssiegelschicht und der Trägerschicht, und wobei die Deckschicht von der Trägerschicht peelbar ist.

Bei einer ersten erfindungsgemässen Ausführung der Deckfolie ist die Trägerschicht eine 5 bis 40 µm, vorzugsweise 7 bis 30 µm dicke Aluminiumfolie. Die Aluminiumfolie kann hart oder weich sein.

Bei einer zweiten erfindungsgemässen Ausführung der Deckfolie ist die Trägerschicht ein durchdrückbarer, 10 bis 40 µm, vorzugsweise 15 bis 30 µm dicker Film aus Polyvinylchlorid (PVC) oder ein 10 bis 50 µm, vorzugsweise 15 bis 35 µm dicker Film aus Polypropylen (PP).

Ist die Trägerschicht ein durchdrückbarer Kunststofffilm, kann dieser mit einem Barrierewerkstoff gegen den Durchtritt von Gasen, Feuchtigkeit und Aromen beschichtet sein. Der Barrierewerkstoff kann als organische Beschichtung, z.B. als PVDC, oder als anorganische Beschichtung, z.B. als Silizium- oder Aluminiumoxid, aufgebracht werden. Eine andere Möglichkeit ist die Verwendung eines Aclar®- oder PVdC-Films auf der Aussenseite, d.h. als erster oder zweiter Kunststofffilm der Deckschicht.

Bei beiden Ausführungen -- Aluminiumfolie bzw. durchdrückbarer Kunststofffilm -- kann als Deckschicht ein 5 bis 40 µm, vorzugsweise 12 bis 30 µm dicker cast, mono- oder biaxial orientierter erster Kunststofffilm gegen die Aluminiumfolie bzw. gegen den durchdrückbaren Kunststofffilm kaschiert sein, wobei im Fall einer Aluminiumfolie als Trägerschicht diese auf der gegen die Deckschicht weisenden Oberfläche vorzugsweise mit 0,2 bis 5 g/m², insbesondere mit 0,5 bis 2 g/m² Primer lackiert ist.

Als Kaschierkleber geeignet sind Kleber auf Basis von z.B. Polyurethane, Acrylate oder Kasein-Latex mit einem Auftragsgewicht von 1 bis 6 g/m², vorzugsweise 2 bis 4 g/m². Die Klebkraft der Verbindung wird so eingestellt, dass sich eine sehr geringe Haftung zur Aluminiumfolie bzw. zum durchdrückbaren Kunststofffilm, zur gegebenenfalls auf der Aluminiumfolie angeordneten Lackschicht und zum ersten Kunststofffilm ergibt. Die Haftung muss jedoch so hoch sein, dass keine Delamination eintreten kann.

Als Deckschicht geeignet sind bevorzugt Kunststofffilme auf Basis von: Polyester, PET, PEN, Polypropylene, PVC, Polyamid (PA), Polyimid, Polyethylene, Polycarbonat und Polysulfone. Wird kein Papier oder ein weiterer Kunststofffilm gegenkaschiert, muss bei thermoplastischen Folien ein Hitzeschutzlack appliziert werden.

Die Deckschicht kann einen mittels eines Kaschierklebers gegen den ersten Kunststofffilm kaschierten zweiten Kunststofffilm oder eine gegen den ersten Kunststofffilm kaschierte Papierschicht aufweisen, wobei die Haftung des Kaschierklebers zum ersten und/oder zweiten Kunststofffilm oder zur Papierschicht höher ist als die Haftung zwischen dem ersten Kunststofffilm und der Trägerschicht.

Als Kaschierkleber geeignet sind Kleber auf Basis von z.B. Polyurethane, Acrylate oder Kasein-Latex mit einem Auftragsgewicht von 1 bis 6 g/m², vorzugsweise 2 bis 4 g/m². Die Klebkraft der Verbindung wird so eingestellt, dass sich eine so hohe Haftung zwischen dem ersten und dem zweiten Kunststofffilm bzw. zwischen dem ersten Kunststofffilm und der Papierschicht ergibt, dass beim Entfernen der zwei Schichten (Kunststofffilm/Kunststofffilm bzw. Kunststofffilm/Papierschicht) keine Trennung im Laminat entstehen kann.

Als zweite Kunststofffilme geeignet sind Filme auf Basis von: Polyester, PET, PEN, Polypropylene, PVC, Polyamid, Polyimid, Polyethylene, Polycarbonat und Polysulfone. Als Papierschicht geeignet ist Papier in einer Grammatur von 15 bis 150 g/m², vorzugsweise 18 bis 50 g/m². Das Papier kann gestrichen, satiniert oder unbehandelt sein. Möglich ist auch die Verwendung von Pergament- oder Pergaminpapier.

Die zur Siegelung gegen ein Blisterbodenteil vorgesehene Aluminiumfolie hat auf der Innenseite, d.h. auf der dem Bodenteil zugewandten Seite, eine Schicht zur Versiegelung gegen das Bodenmaterial. Diese Siegelschichten können sein:
- die gleichen Siegellacke wie bei einer herkömmlichen Durchdrückfolie,
- eine Extrusionsbeschichtung mit Kunstoffen, wie z.B. Polyethylene, lonomere (z.B. Surlyn®, a-peel® oder Bynel®), oder Polypropylene im Dickenbereich von 6 bis 40 g/m², vorzugsweise 10 bis 30 g/m², direkt auf die Aluminiumfolie, auf einen Primer oder als Coxtrusion,
- eine Kaschierung mit Kunststofffilmen, wie z.B. PET, PVC, Polypropylene, Polyacrylnitril (Barex®), PCFE (Aclar®) oder PVDC im Dickenbereich von 5 bis 50 µm, vorzugsweise 6 bis 30 µm, wobei als Kaschiermittel z.B. Polyurethane, Acrylate, Kasein-Latex mit einem Auftragsgewicht von 1 bis 6 g/m², vorzugsweise 2 bis 4 g/m² verwendet werden kann, oder als Extrusionskaschierung.

Eine Bedruckung erfolgt üblicherweise auf dem Papier oder dem äusseren Kunststofffilm als Schön- oder Konterdruck. Die Innenseite, d.h. die Heisssiegellackschicht, kann -- z.B. für Kalenderpackungen - ebenfalls bedruckt sein.

Mit Papier und Kunststofffilmen auf der Aussenseite kann auch an der Abpackanlage gedruckt werden. Bei Kunststofffilmen kann ein Druckprimer erforderlich sein.

Zur Öffnung einer Blisterverpackung wird ein nicht gesiegelter Bereich gefasst und der peelbare Teil, d.h. der erste Kunststofffilm, ein Laminat aus erstem und zweitem Kunststofffilm oder ein Laminat aus Kunststofffilm und Papier, abgezogen. Danach kann das Produkt durch die Aluminiumfolie oder durch den durchdrückbaren Kunststofffilm gedrückt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau einer ersten Deckfolie;
- Fig. 2: den Schichtaufbau einer zweiten Deckfolie;
- Fig. 3: den Schichtaufbau einer dritten Deckfolie;
- Fig. 4: die Draufsicht auf ein Blisterbodenteil;
- Fig. 5: den Schnitt durch das Blisterbodenteil von Fig. 4 nach der Linie I-I;
- Fig. 6: das Blisterbodenteil von Fig. mit aufgesiegelter Deckfolie.

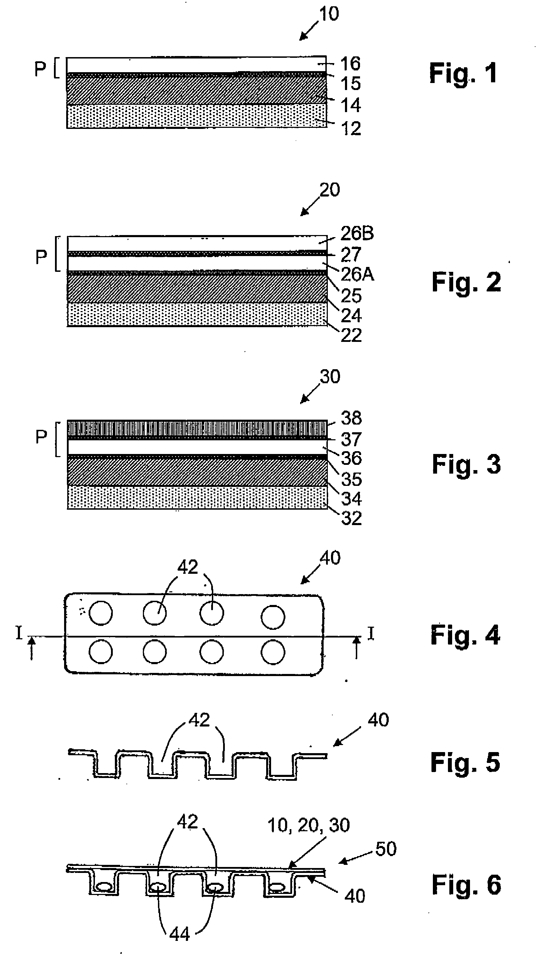

Eine in Fig. 1 gezeigte erste Deckfolie 10 für Blisterverpackungen weist den folgenden Schichtaufbau auf:
- 12: Heisssiegelschicht aus z.B. PE
- 14: Trägerschicht aus einer Aluminiumfolie oder aus einem durchdrückbaren Kunststofffilm aus z.B. PP
- 15: Kaschierkleber, z.B. auf PU-Basis
- 16: Deckschicht aus z.B. PEN

Die Deckschicht 16 bildet die spätere Aussenseite und die Siegelschicht 12 die Innenseite der auf ein Blisterbodenteil gesiegelten Deckfolie 10. Das Blisterbodenteil besteht z.B. aus PP. Die Deckschicht 16 ist ein von der Trägerschicht 14 peelbarer Film P.

Eine in Fig. 2 gezeigte zweite Deckfolie 20 für Blisterverpackungen weist den folgenden Schichtaufbau auf:
- 22: Heisssiegelschicht aus z.B. Surlyn®
- 24: Trägerschicht aus einer Aluminiumfolie oder aus einem durchdrückbaren Kunststofffilm aus z.B. PVC
- 25: Kaschierkleber, z.B. auf PU-Basis
- 26A: erster Kunststofffilm aus z.B. PVDC
- 27: Kaschierkleber, z.B. auf PU-Basis
- 26B: zweiter Kunststofffilm aus z.B. PA

Der zweite Kunststofffilm 26B bildet die spätere Aussenseite und die Siegelschicht 22 die Innenseite der auf ein Blisterbodenteil gesiegelten Deckfolie 20. Das Blisterbodenteil besteht z.B. aus PVC. Der erste Kunststofffilm 26A, der Kaschierkleber 27 und der zweite Kunststofffilm 26B bilden ein von der Trägerschicht 24 peelbares Teillaminat P.

Eine in Fig. 3 gezeigte dritte Deckfolie 30 für Blisterverpackungen weist den folgenden Schichtaufbau auf:
- 32: Heisssiegelschicht aus z.B. PE
- 34: Trägerschicht aus einer Aluminiumfolie oder aus einem durchdrückbaren Kunststofffilm aus z.B. PVC
- 35: Kaschierkleber, z.B. auf PU-Basis
- 36: Kunststofffilm aus z.B. PET
- 37: Kaschierkleber, z.B. auf PU-Basis
- 38: Papierschicht

Die Papierschicht 38 bildet die spätere Aussenseite und die Siegelschicht 32 die Innenseite der auf ein Blisterbodenteil gesiegelten Deckfolie 30. Das Blisterbodenteil besteht z.B. aus PVC. Der Kunststofffilm 36, der Kaschierkleber 37 und die Papierschicht 38 bilden ein von der Trägerschicht 34 peelbares Teillaminat P.

Ein in Fig. 4 gezeigtes, durch Thermoformung hergestelltes Blisterbodenteil 40 weist napfförmige Behältnisse oder Näpfe 42 zur Aufnahme von beispielsweise Tabletten 44 auf.

Wie in den Fig. 5 und 6 dargestellt, wird nach dem Befüllen der Näpfe 42 mit Tabletten 44 zur Bildung einer Blisterpackung 50 eine Deckfolie 10, 20, 30 auf das Blisterbodenteil 40 aufgesiegelt.

## Patentansprüche

1. Deckfolie für thermo- und kaltgeformte Blisterbodenteile von kindergesicherten Blisterverpackungen, bestehend aus einem Mehrschichtlaminat mit einer zur Siegelung gegen ein Blisterbodenteil vorgesehenen Heisssiegelschicht (12, 22, 32), einer an die Heisssiegelschicht (12, 22, 32) angrenzenden Trägerschicht (14, 24, 34) und einer an die Trägerschicht angrenzenden Deckschicht (16),
**dadurch gekennzeichnet, dass**
die Trägerschicht (14, 24, 34) eine Aluminiumfolie oder einen durchdrückbaren Kunststoffilm umfasst und die Deckschicht (16) mittels eines Kaschierklebers (15) gegen die Trägerschicht (14, 24, 34) kaschiert ist, wobei die Haftung des Kaschierklebers (15) zur Trägerschicht (14, 24, 34) und/oder zur Deckschicht (16) geringer ist als die Haftung zwischen der Heisssiegelschicht (12, 22, 32) und der Trägerschicht (14, 24, 34), und wobei die Deckschicht (16) von der Trägerschicht (14, 24, 34) peelbar ist.

2. Deckfolie nach Anspruch 1, **dadurch gekennzeichnet, dass** die Träger schicht (14, 24, 34) eine 5 bis 40 µm, vorzugsweise 7 bis 30 µm dicke Aluminiumfolie ist.

3. Deckfolie nach Anspruch 1, **dadurch gekennzeichnet, dass** die Trägerschicht (14, 24, 34) ein durchdrückbarer, 10 bis 40 µm, vorzugsweise 15 bis 30 µm dicker Film aus Polyvinylchlorid (PVC) oder ein 10 bis 50 µm, vorzugsweise 15 bis 35 µm dicker Film aus Polypropylen (PP) ist.

4. Deckfolie nach Anspruch 2 oder 3, **dadurch gekennzeichnet, dass** die Trägerschicht (14, 24, 34) auf der gegen die Deckschicht (16) weisenden Oberfläche mit 0,2 bis 5 g/m², vorzugsweise 0,5 bis 2 g/m² Primer lackiert ist.

5. Deckfolie nach einem der Ansprüche 1 bis 4, **dadurch gekennzeichnet, dass** die Deckschicht (16) einen 5 bis 40 µm, vorzugsweise 12 bis 30 µm dicken cast, mono- oder biaxial orientierter ersten Kunststofffilm (16A) umfasst.

6. Deckfolie nach Anspruch 5, **dadurch gekennzeichnet, dass** die Deckschicht (16) einen mittels eines Kaschierklebers (25, 27, 35) gegen einen ersten Kunststofffilm (26A) kaschierten zweiten Kunststofffilm (26B) oder eine gegen einen ersten Kunststofffilm (36) kaschierte Papierschicht (38) aufweist, wobei die Haftung des Kaschierklebers (25, 27, 37) zum ersten und/oder zweiten Kunststofffilm (26A, 26B) oder zur Papierschicht (38) höher ist als die Haftung zwischen dem ersten Kunststofffilm (26A, 36) und der Trägerschicht (24, 34).

7. Deckfolie nach Anspruch 3, **dadurch gekennzeichnet, dass** die Trägerschicht (14, 24, 34) mit einem Barrierewerkstoff gegen den Durchtritt von Gasen, Feuchtigkeit und Aromen beschichtet ist.

8. Blisterverpackung mit einem Blisterbodenteil (40) und einer gegen das Blisterbodenteil (40) gesiegelten Deckfolie (10, 20, 30) bestehend aus einem Mehrschichtlaiminat mit einer zur Siegelung gegen ein Blisterbodenteil (40) vorgesehenen Heisssiegelschicht (12, 22, 32), einer an die Heisssiegelschicht (12, 22, 32) angrenzenden Trägerschicht (14, 24, 34) und einer an die Trägerschicht angrenzenden Deckschicht (16),
**dadurch gekennzeichnet, dass**
die Trägerschicht (14, 24, 34) eine Aluminiumfolie oder einen durchdrückbaren Kunststofffilm umfasst und die Deckschicht (16) mittels eines Kaschierklebers (15) gegen die Trägerschicht (14, 24, 34) kaschiert ist, wobei die Haftung des Kaschierklebers (15) zur Trägerschicht (14) und/oder zur Deckschicht (16) geringer ist als die Haftung zwischen der Heisssiegelschicht (12, 22, 32) und der Trägerschicht (14, 24, 34), und wobei die Deckschicht (16) von der Trägerschicht (14, 24, 34) peelbar ist.

9. Blisterverpackung nach Anspruch 8, **dadurch gekennzeichnet, dass** die Trägerschicht (14, 24, 34) eine 5 bis 40 µm, vorzugsweise 7 bis 30 µm dicke Aluminiumfolie ist.

10. Blisterverpackung nach Anspruch 8, **dadurch gekennzeichnet, dass** die Trägerschicht (14, 24, 34) ein durchdrückbarer, 10 bis 40 µm, vorzugsweise 15 bis 30 µm dicker Film aus Polyvinylchlorid (PVC) oder ein 10 bis 50 µm, vorzugsweise 15 bis 35 µm dicker Film aus Polypropylen (PP) ist.

11. Blisterverpackung nach Anspruch 9 oder 10, **dadurch gekennzeichnet, dass** die Trägerschicht (14, 24, 34) auf der gegen die Deckschicht (16) weisenden Oberfläche mit 0,2 bis 5 g/m², vorzugsweise 0,5 bis 2 g/m² Primer lackiert ist.

12. Blisterverpackung nach einem der Ansprüche 8 bis 11, **dadurch gekennzeichnet, dass** die Deckschicht (16) einen 5 bis 40 µm, vorzugsweise 12 bis 30 µm dicken cast, mono- oder biaxial orientierter ersten Kunststofffilm (16A) umfasst.

13. Blisterverpackung nach Anspruch 12, **dadurch gekennzeichnet, dass** die Deckschicht (16) einen mittels eines Kaschierklebers (25, 27, 37) gegen einen ersten Kunststofffilm (26A) kaschierten zweiten Kunststofffilm (26B) oder eine gegen einen ersten Kunststofffilm (36A) kaschierte Papierschicht (37) aufweist, wobei die Haftung des Kaschierklebers (25, 27, 37) zum ersten und/oder zweiten Kunststofffilm (26A, 26B) oder zur Papierschicht (37) höher ist als die Haftung zwischen dem ersten Kunststofffilm (26A, 36) und der Trägerschicht (24, 34).

14. Blisterverpackung nach Anspruch 10, **dadurch gekennzeichnet, dass** die Trägerschicht (14, 24, 34) mit einem Barrierewerkstoff gegen den Durchtritt von Gasen, Feuchtigkeit und Aromen beschichtet ist.

15. Verwendung einer Blisterverpackung (50) nach einem der vorangehenden Ansprüche als kindersicheren Verpackung für kosmetische, pharmazeutische und medizinaltechnische Produkte, Diagnostika, Nahrungsergänzungsmittel, Lebensmittel und Süsswaren.
